(19) Europäisches Patentamt
European Patent Office
Office européen des brevets

(11) Veröffentlichungsnummer: 0 000 119
A1

(12)

# EUROPÄISCHE PATENTANMELDUNG

(21) Anmeldenummer: 78100077.3

(22) Anmeldetag: 02.06.78

(51) Int. Cl.2: C 01 D 1/42, C 01 D 1/04

(30) Priorität: 01.07.77 DE 2729715

(43) Beröffentlichungstag der Anmeldung: 10.01.79 Patentblatt 79/1

(84) Benannte Vertragsstaaten: CH DE FR GB

(71) Anmelder: DYNAMIT NOBEL AKTIENGESELLSCHAFT, Patentabteilung Postfach 1209, D-5210 Troisdorf, Bez. Köln (DE)

(72) Erfinder: Flick, Wilhelm, Dr., Kölner Strasse 7, 5000 Köln 90 (DE)

(72) Erfinder: Lenz, Arnold, Dr., Gerstenkamp 7, D-5000 Köln-Stammheim (DE)

(54) **Verfahren zur Herstellung wasserfreier Ätzalkalischmelzen.**

(57) Es wird ein Verfahren zur Herstellung von wasserfreiem Alkalihydroxid beschrieben, das darin besteht, Alkalihydroxid mit einem Wassergehalt bis zu 10 % mit Natriummonoxid und/oder Kaliummonoxid aufzuschmelzen. Ein Erhitzen auf Temperaturen oberhalb des Schmelzpunktes ist nicht notwendig. Bei der Herstellung von Ätzalkaligemischen, für die das Verfahren besonders geeignet ist, genügen Temperaturen zwischen 180 und 250 °C. Das Erhitzen erfolgt unter Feuchtigkeitsausschluß, z.B. in Stickstoffatmosphäre.

EP 0 000 119 A1

Troisdorf, den 30. Mai 1978
OZ: 77050 (2754) Dr.Sk/Sch

DYNAMIT NOBEL AKTIENGESELLSCHAFT
Troisdorf, Bez. Köln

Verfahren zur Herstellung wasserfreier Ätzalkali-schmelzen

Gegenstand der vorliegenden Erfindung ist ein Verfahren zur Herstellung wasserfreier Ätzkali- und/oder Ätznatron-schmelzen. Das Verfahren eignet sich bevorzugt zur Herstellung wasserfreier Ätzkali/Ätznatron-Mischschmelzen.

Es ist bekannt, daß Ätzkali und Ätznatron in festem Zustand stark hygroskopische Hydrate bilden, die aus den entsprechenden Ätzalkalilaugen je nach Konzentration und Temperatur der Lauge mit unterschiedlichem Kristallwassergehalt auskristallisieren.

Während festes Ätzkali etwa 90 bis 92 %, teilweise bis zu 96 % Feststoffanteil KOH besitzt, liegt der Wassergehalt des handelsüblichen Ätznatrons bei 1 bis 2 %.

Die Schmelzen bzw. Mischschmelzen von solchen handelsüblichen Ätzalkalien mit einem Wassergehalt von 1 bis 10 % sind für Reaktionen, die in der Schmelze bei Anwesenheit

reaktiver Komponenten, wie z.B. Natriumhydrid oder Natriumamid, durchgeführt werden, ungeeignet. Sie müssen deshalb vor solchen Reaktionen einer speziellen Entwässerung unterzogen werden, die bisher nach verschiedenen Verfahren durchgeführt wurde: Die Herstellung von wasserfreiem Ätzalkali erfolgte bisher durch Eindampfen von wasserhaltigem Alkalihydroxid unter Normaldruck oder reduziertem Druck in Verdampferanlagen verschiedener Bauart. Auch das Eindampfen in Anwesenheit einer Schutzgasatmosphäre ist bekannt. Die Nachteile dieser Entwässerungsverfahren liegen darin, daß für die quantitative Entfernung des Kristallwassers aus Ätznatron oder Ätzkali Temperaturen oberhalb 450 °C bzw. 500 °C erforderlich sind und aufgrund der bei diesen Temperaturen sehr starken Aggressivität der Schmelzen hohe Anforderungen an das Gefäßmaterial gestellt werden. Zur Behebung dieser Nachteile wurde bereits vorgeschlagen, das Abdampfen des Restwassers in silberplattierten Apparaturen durchzuführen. Diese Arbeitsweise bedingt jedoch eine zusätzliche aufwendige Herstellung dieser speziellen Apparaturen.

Es bestand deshalb die Aufgabe, ein Verfahren zur Herstellung wasserfreier Ätzalkalischmelzen zu finden, das in den üblichen, alkalibeständigen Apparaturen und Behältern durchgeführt werden kann und bei dem ein zusätzliches Erhitzen auf Temperaturen oberhalb 450 °C entfällt. Weiterhin soll das Verfahren bevorzugt bei Normaldruck durchführbar sein.

In Erfüllung dieser Aufgabe wurde nun ein Verfahren zur Herstellung wasserfreier Ätzalkalischmelzen gefunden, das dadurch gekennzeichnet ist, daß man wasserhaltiges, festes Alkalihydroxid mit einer seinem Wassergehalt mindestens äquimolaren Menge an Natrium- und/oder Kaliummonoxid aufschmilzt.

Unter äquimolaren Mengen der Alkalioxide sollen erfindungsgemäß die Mengen verstanden werden, die sich gemäß der Reaktionsgleichung

$Na_2O\ (K_2O) + H_2O \longrightarrow 2\ NaOH\ (KOH)$

mit Wasser umsetzen. Ein Überschuß entsprechend dieser Menge ist einsetzbar und stört das erfindungsgemäße Verfahren nicht. Der Wassergehalt des einzusetzenden Ätzalkalis wird zweckmäßigerweise durch Titration mit 0,5 n Schwefelsäure ermittelt. Entsprechend diesem Wassergehalt wird die Menge des zuzusetzenden Alkalioxids bestimmt.

Die dem Verfahren zugrundeliegenden Ätzalkali-Alkalimonoxid-Feststoffgemische sind unter Feuchtigkeitsausschluß inert, schütt- und lagerfähig, so daß eine gute Handhabbarkeit der Gemische gegeben ist. Diese Eigenschaften bleiben auch bei Einsatz eines Überschusses an Alkalioxid erhalten.
Der Einsatz eines solchen Überschusses ist auch dann von Vorteil, wenn man die Ätzalkali-Alkalimonoxid-Feststoffgemische bzw. die entwässerten Ätzalkalischmelzen an der Luft handhaben will oder wenn man der Schmelze noch weitere Komponenten hinzugeben will, die ggf. ebenfalls entwässert werden sollen.

Das Aufschmelzen und Entwässern der Ätzalkali-Alkalioxid-Gemische bzw. der direkte Zusatz der Alkalioxide zu den zu entwässernden Schmelzen erfolgt bei relativ niedriger Temperatur, d.h. es genügen Temperaturen, die nur geringfügig über dem Schmelzpunkt von Ätzkali oder Ätznatron oder deren Gemische liegen. Diese Schmelztemperaturen hängen von dem Wassergehalt der eingesetzten Ätzalkalischmelzen und dem Mischungsverhältnis KOH/NaOH ab. Im allgemeinen arbeitet man bei Temperaturen zwischen 200 °C und 420 °C.

Die Durchführung des erfindungsgemäßen Verfahrens erfolgt im allgemeinen in der Weise, daß technisches Ätzkali oder Ätznatron bzw. Ätzkali/Ätznatron-Mischungen in Schuppen-, Pulver oder stückiger Form mit einer mindestens dem

Wassergehalt dieser Ätzalkali bzw. der Ätzalkalimischung äquimolaren Menge Kalium- oder Natriummonoxid möglichst homogen gemischt und anschließend aufgeschmolzen wird. Wenn einer oder mehrere der Komponenten in stückiger Form vorliegen, erfolgt das Mischen zweckmäßigerweise unter Zerkleinerung. Alle Arbeiten sollen möglichst unter Feuchtigkeitsausschluß durchgeführt werden, indem z.B. in einer Stickstoffatmosphäre - oder einer anderen Inertgasatmosphäre - gearbeitet wird. Auch eine Beschleierung mit trockener Luft ist möglich.

Ätzkali/Ätznatron-Mischungen können im beliebigen Mischungsverhältnis mit der je nach ihrem Wassergehalt erforderlichen Menge Natriummonoxid aufgeschmolzen werden; vorzugsweise erfolgt der Ansatz der Ätzkali/Natriummonoxid-Feststoffmischungen dabei jedoch so, daß der Anteil an Ätzkali in der aufgeschmolzenen Mischung 60 Gew.-% beträgt, so daß eine eutektische Mischung vorliegt, wobei die Aufschmelztemperaturen zwischen 180 und 250 °C liegen.

Nach dem erfindungsgemäßen Entwässern des Ätzalkalis kann man diesem reaktive Komponenten wie Natriumhydrid oder Natriumamid zumischen bzw. zuschmelzen, ohne daß dabei eine störende Bildung von Wasserstoff oder Ammoniak eintritt. Derartige Schmelzen können dann z.B. als Kondensations- und Dehydratisationsmittel bei Farbstoffsynthesen, wie z.B. bei der Indigo-Synthese, eingesetzt werden.

Beispiel 1

65,9 Gew.-Teile KOH mit einem Wassergehalt von 9 %, 13,2 Gew.-Teile NaOH mit einem Wassergehalt von 1 % und 20,9 Gew.-Teile $Na_2O$ werden unter Stickstoffatmosphäre gemischt und bei einer Temperatur von 210 bis 220 °C vollständig aufgeschmolzen.

Das angegebene Mischungsverhältnis entspricht einer wasserfreien eutektischen Schmelze von 60 Gew.-% KOH und 40 Gew.-% NaOH.

Der Wassergehalt der erhaltenen Schmelze lag bei 0 Gew.-%; er wurde durch mehrmaliges vorsichtiges Erhitzen (ca. 5 Minuten) einer eingewogenen Probe der Feststoffmischung auf etwa 600 bis 700 °C bis zur Gewichtskonstanz bestimmt. Das Abkühlen der erhitzten Proben auf Raumtemperatur erfolgte im Exsiccator.

Beispiel 2

72 Gew.-Teile KOH mit einem Wassergehalt von 9,7 %, 2 Gew.-Teile NaOH mit einem Wassergehalt von 1,8 % und 26 Gew.-Teile $Na_2O$ wurden analog Beispiel 1 gemischt. Das Mischungsverhältnis entspricht einer wasserfreien Ätzalkalischmelze mit 65 Gew.-% KOH, 33,3 Gew.-% NaOH und 1,7 Gew.-% $Na_2O$. Die zum vollständigen Aufschmelzen der Feststoffmischung erforderliche Temperatur lag bei 220 °C, der Wassergehalt der Schmelze wurde auf die im Beispiel 1 beschriebene Art bestimmt; er lag bei 0 Gew.-%.

Patentansprüche:

1. Verfahren zur Herstellung wasserfreier Ätzalkalischmelzen, d a d u r c h g e k e n n z e i c h n e t, daß man wasserhaltiges, festes Alkalihydroxid mit einer seinem Wassergehalt mindestens äquimolaren Menge an Natrium- und/oder Kaliummonoxid aufschmilzt.

2. Verfahren zur Herstellung wasserfreier Ätznatronschmelzen gemäß Anspruch 1, dadurch gekennzeichnet, daß man wasserhaltiges Ätznatron mit einem seinem Wassergehalt mindestens äquimolaren Zusatz an Natriummonoxid aufschmilzt.

3. Verfahren zur Herstellung wasserfreier Ätzkalischmelzen gemäß Anspruch 1, dadurch gekennzeichnet, daß man wasserhaltiges Ätzkali mit einem seinem Wassergehalt mindestens äquimolaren Zusatz an Kaliummonoxid aufschmilzt.

4. Verfahren zur Herstellung wasserfreier Ätzkali/Ätznatron-Schmelzen gemäß Anspruch 1, dadurch gekennzeichnet, daß man ein wasserhaltiges Ätzkali/Ätznatron-Gemisch mit einem dem Wassergehalt des Gemischs mindestens äquivalenten Zusatz an Natriummonoxid aufschmilzt.

5. Verfahren nach einem der Ansprüche 1 oder 4, dadurch gekennzeichnet, daß das Mischungsverhältnis Ätzkali/Ätznatron/Natriummonoxid so gewählt wird, daß man nach dem Aufschmelzen eine eutektische Ätzkali/Ätznatron-Mischung erhält und das Aufschmelzen bei Temperaturen zwischen 180 und 250 °C durchführt.

6. Verfahren gemäß einem der Ansprüche 1 bis 5, dadurch gekennzeichnet, daß das Aufschmelzen unter Feuchtigkeitsausschluß durchgeführt wird.

Europäisches Patentamt

# EUROPÄISCHER RECHERCHENBERICHT

0000119

EP 78 10 0077

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | FR - A - 723 031 (DEGUSSA)<br>* Seite 2, Zeilen 27-34, 73-81 *<br>---- | 1,2 | C 01 D 1/42<br>C 01 D 1/04 |

RECHERCHIERTE SACHGEBIETE (Int. Cl.²)

C 01 D 1/42
C 01 D 1/44
C 01 D 1/04
C 01 D 1/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 29-08-1978 | VAN BELLINGEN |